# EUROPEAN PATENT APPLICATION

(11) **EP 4 303 136 A1**
(43) Date of publication of application: **10.01.2024**
(21) Application number: 22781524.8
(22) Date of filing: 28.03.2022
(51) Int. Cl.: B65B 11/52, B65B 41/02, B65B 65/02, B65B 57/04

(54) **BLISTER SHEET SUPPLY UNIT FOR BLISTER PACK AND MEDICAL BLISTER PACKING DEVICE COMPRISING SAME**

(30) Priority: 29.03.2021 KR 20210040713
(71) Applicant: Cretem Co., Ltd., Anyang-si, Gyeonggi-do 14057 (KR)
(72) Inventor: KIM, Hoyeon, Anyang-si, Gyeonggi-do 14062 (KR)
(74) Representative: BCKIP Part mbB
(86) International application number: PCT/KR2022/004304
(87) International publication number: WO 2022/211405

(57) **Abstract**

Disclosed are a blister sheet supply unit for a blister pack, which supplies a plurality of blister sheets stacked on one another by dropping the blister sheets one by one onto a blister sheet tray to be supported thereby, a plurality of medicine pockets being formed on the blister sheets, and a medical blister packing device comprising same. The disclosed blister sheet supply unit for a blister pack comprises: a fork for supporting the second-lowest layered blister sheet positioned directly above the lowest layered blister sheet when a lifting plate moves from a backward movement position spaced apart from a plurality of blister sheets stacked at a time of being positioned at a support position to a forward movement position traversing the plurality of stacked blister sheets; and a stopper movable between a fall-restraining position at which the stopper prevents falling of the lowest layered blister sheet by blocking the left and the right end of the lowest layered blister sheet and a fall allowing position at which the stopper does not block the left and the right end of the lowest layered blister sheet.

## Description

### [Technical Field]

The present invention relates to a blister sheet supply unit for a blister pack that separates and supplies blister sheets for a blister pack one by one and a blister packing apparatus for drugs including the same.

### [Background Art]

Drugs prepared in hospitals or pharmacies according to prescriptions are packaged in unit doses in plastic bags, or are packaged and sealed in a blister pack.

The blister pack includes a blister sheet and a cover. A plurality of drug pockets is formed in the blister sheet. The plurality of drug pockets is arranged in a matrix. The cover is attached to an upper surface of the blister sheet so that the plurality of drug pockets is hermetically sealed.

A method of packaging and sealing drugs using a blister pack may prevent theft, loss, or abuse of drugs. In addition, this method is increasingly used because the method has an effect of assisting a user in correctly taking drugs when a drug-taking procedure is complicated, for example, when drugs to be taken after lunch and drugs to be taken after dinner are different from each other.

In order to improve efficiency of packaging drugs in a blister pack according to a prescription, a blister packing apparatus for drugs capable of automatically dispensing drugs of unit doses and packaging the same in a blister pack is required. In addition, the blister packing apparatus needs to include a blister sheet supply unit for a blister pack that separates and supplies a plurality of stacked blister sheets one by one.

### [Disclosure]

### [Technical Problem]

The present invention provides a blister sheet supply unit for a blister pack that has high operational reliability and a blister packing apparatus for drugs including the same. The provided blister sheet supply unit for a blister pack supplies a blister sheet one by one by separating a blister sheet located at the lowest position from among a plurality of stacked blister sheets and dropping the separated blister sheet.

### [Technical Solution]

The present invention provides a blister sheet supply unit for a blister pack configured to drop and supply a plurality of stacked blister sheets, each including a plurality of drug pockets formed to be open upward and spaced apart from each other, one by one so as to be supported on a blister sheet tray.

The blister sheet supply unit for a blister pack includes a lifting plate, a fork, and a stopper.

The lifting plate supports a lowermost blister sheet among the plurality of stacked blister sheets when located at a support position, and is separated from the lowermost blister sheet when moving down to a bottom position lower than the support position.

The fork supports a second lowermost blister sheet disposed directly on the lowermost blister sheet when moving from a backward position spaced apart from the plurality of stacked blister sheets to a forward position across the plurality of stacked blister sheets in the state in which the lifting plate is located at the support position.

The stopper is movable between a falling prevention position at which the stopper blocks left and right end portions of the lowermost blister sheet and a falling allowance position. The falling prevention position is a position at which the stopper prevents falling of the lowermost blister sheet. The falling allowance position is a position at which the stopper does not block the left and right end portions of the lowermost blister sheet.

The lifting plate may be located at the support position to support the lowermost blister sheet, and the fork may be located at the forward position to support the second lowermost blister sheet. In this case, in the state in which the stopper is located at the falling preventing position, when the lifting plate moves down to the bottom position, when the blister sheet tray moves to a position above the lifting plate so as to overlap the lifting plate, and when the stopper moves to the falling allowance position, the lowermost blister sheet falls down and is supported on the blister sheet tray. In addition, the second lowermost blister sheet supported by the fork may become a new lowermost blister sheet.

After the blister sheet is supported on the blister sheet tray, the following processes are sequentially implemented. The blister sheet tray having the blister sheet supported thereon moves to a position not overlapping the lifting plate. The lifting plate moves up to a preparation position higher than the support position to support the new lowermost blister sheet. The fork moves to the backward position, and then the lifting plate moves down to the support position. The stopper moves to the falling prevention position. The fork moves to the forward position to support a new second lowermost blister sheet disposed directly on the new lowermost blister sheet.

The blister sheet may include a plurality of pocket portions protruding downward to form the plurality of drug pockets and a flat portion supporting the plurality of pocket portions. The fork may include a plurality of horizontal bars spaced apart from each other. In this case, the horizontal bars extend in a horizontal direction in order to contact and support the flat portion of the blister sheet. When the fork is located at the backward position, the second lowermost blister sheet is stacked on the lowermost blister sheet such that the plurality of pocket portions thereof is fitted into the plurality of drug pockets of the lowermost blister sheet, and when the fork moves from the backward position to the forward position, the plurality of horizontal bars increases a gap between the flat portion of the lowermost blister sheet and the flat portion of the second lowermost blister sheet so that the plurality of pocket portions of the second lowermost blister sheet is separated from the plurality of drug pockets of the lowermost blister sheet.

The plurality of horizontal bars may be provided in a pair, a gap between one end portion among the left and right end portions of the second lowermost blister sheet and an end portion of the lowermost blister sheet corresponding to the one end portion may be greater than a gap between the other end portion of the second lowermost blister sheet and an end portion of the lowermost blister sheet corresponding to the other end portion, and, among the pair of horizontal bars, a distal end of a horizontal bar closer to end portions having the greater gap therebetween may further protrude toward the second lowermost blister sheet than a distal end of the other horizontal bar.

The blister sheet supply unit for a blister pack of the present invention may further include a suction holder configured to suck and pull down the flat portion of the lowermost blister sheet. When the fork moves from the backward position to the forward position and distal ends of the plurality of horizontal bars enter a gap between the flat portion of the lowermost blister sheet and the flat portion of the second lowermost blister sheet, the suction holder increases the gap between the flat portion of the lowermost blister sheet and the flat portion of the second lowermost blister sheet.

The blister sheet supply unit for a blister pack of the present invention may further include a stopper driving motor and a guide plate. The stopper driving motor provides power to move the stopper between the falling prevention position and the falling allowance position. The guide plate is disposed on an upper side or a lower side of the stopper, and is reciprocated in a direction intersecting a moving direction of the stopper by power of the stopper driving motor. In this case, the guide plate includes an oblique groove formed therein so as to extend obliquely with respect to a moving direction of the guide plate, and the stopper includes a link protrusion fitted into the oblique groove. When the guide plate moves in one direction and an opposite direction, the link protrusion fitted into the oblique groove is pushed and pressed by an inner surface defining the oblique groove, whereby the stopper may move to the falling prevention position and the falling allowance position.

The blister sheet supply unit for a blister pack of the present invention may further include a sheet loading detection sensor configured to detect whether one blister sheet is supported on the blister sheet tray.

The blister sheet may include a plurality of pocket portions and a flat portion. The plurality of pocket portions protrudes downward to form the plurality of drug pockets. The flat portion supports the plurality of pocket portions. In this case, the blister sheet tray may include a flat portion support surface supporting the flat portion of the blister sheet and a plurality of pocket-portion-corresponding cavities formed therein to allow the plurality of pocket portions of the blister sheet to be fitted thereinto in one-to-one correspondence, and the sheet loading detection sensor may be a photo sensor configured to detect, in a non-contact manner, whether at least one of the plurality of pocket-portion-corresponding cavities is blocked by a pocket portion corresponding thereto.

The sheet loading detection sensor may be disposed below the lifting plate, and the lifting plate may be provided with a transparent window to allow light projected upward from the sheet loading detection sensor to travel to the blister sheet tray through the lifting plate.

The blister sheet supply unit for a blister pack of the present invention may further include a sheet absence checking sensor configured to detect whether the blister sheet is supported on the lifting plate located at the support position. When absence of the blister sheet supported on the lifting plate is detected by the sheet absence checking sensor, operation of the lifting plate, the fork, and the stopper may be stopped.

In addition, the present invention may include a drug dispensing unit, a drug supply unit, a blister sheet supply unit for a blister pack, a cover attaching unit, and a blister sheet feeding unit. The drug dispensing unit dispenses and drops drugs prepared in a unit dose according to a prescription to each of a plurality of drug pockets formed in a blister sheet so as to be open upward and spaced apart from each other. The drug supply unit is disposed above the drug dispensing unit to drop drugs to the drug dispensing unit. The above-described blister sheet supply unit for a blister pack drops and supplies a blister sheet having no drugs in the plurality of drug pockets one by one. The cover attaching unit attaches a cover to the blister sheet, with the plurality of drug pockets filled with the drugs, to form a blister pack having the plurality of closed drug pockets. The blister sheet feeding unit feeds the blister sheet falling down from the blister sheet supply unit to the drug dispensing unit, and feeds the blister sheet, with the plurality of drug pockets filled with the drugs, from the drug dispensing unit to the cover attaching unit. In this case, the blister sheet feeding unit may include the blister sheet tray, a tray driver configured to move the blister sheet tray between the blister sheet supply unit for a blister pack, the drug dispensing unit, and the cover attaching unit, and a guide rail configured to guide movement of the blister sheet tray.

The guide rail may extend in a leftward-rightward direction, and the fork may move in a direction intersecting an extending direction of the guide rail.

### [Advantageous Effects]

In the blister sheet supply unit for a blister pack according to the present invention, a fork is introduced between a lowermost blister sheet and a second lowermost blister sheet among a plurality of stacked blister sheets, thereby reliably separating the lowermost blister sheet and the second lowermost blister sheet from each other and supporting the second lowermost blister sheet and the remaining blister sheets stacked thereon so that the blister sheets do not fall down. Accordingly, the reliability and speed of processes in which the blister sheets are dropped one by one and one dropped blister sheet is seated and supported on a blister sheet tray are improved. As a result, the operational efficiency and reliability of the blister packing apparatus for drugs including the blister sheet supply unit for a blister pack are improved.

### [Description of Drawings]

FIG. 1 is a perspective view showing an example of a blister pack for drug packaging.
FIG. 2 is a front view of a blister packing apparatus for drugs according to an embodiment of the present invention.
FIGs. 3 and 4 are a plan view and a left side view of a blister sheet supply unit provided in the blister packing apparatus for drugs shown in FIGs. 1 and 2.
FIGs. 5 to 9 are views sequentially showing operation of the blister sheet supply unit provided in the blister packing apparatus for drugs shown in FIG. 2, wherein FIGs. 5, 7, and 8 are front views, and FIGs. 6 and 9 are left side views.

### [Best Mode]

Hereinafter, a blister sheet supply unit for a blister pack and a blister packing apparatus for drugs including the same according to embodiments of the present invention will be described in detail with reference to the accompanying drawings. Terms used in this specification are used to appropriately describe exemplary embodiments of the present invention, and thus may be changed in accordance with the intention of users or operators, or usual practice in the art to which the present invention pertains. Therefore, the definitions of these terms should be determined based on the total content of this specification.

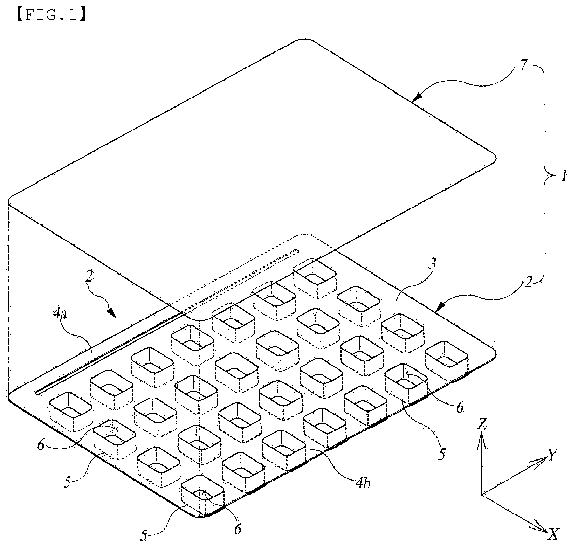

FIG. 1 is a perspective view showing an example of a blister pack for drug packaging. Referring to FIG. 1, a blister sheet 2 for drug packaging used to package drugs prepared according to a prescription includes a plurality of pocket portions 5 protruding downward to form a plurality of drug pockets 6 and a flat portion 3 supporting the plurality of pocket portions 5. The plurality of pocket portions 5 is formed so as to be spaced apart from each other. The plurality of drug pockets 6 is open upward to receive drugs falling thereto in unit doses. The plurality of drug pockets 6 is arranged in a matrix. In the illustrated blister sheet 2, the drug pockets 6 are arranged in 7 rows and 4 columns so as to be filled with a maximum of one week's supply of prepared drugs.

When the plurality of drug pockets 6 is filled with drugs, a sheet-type cover 7 is attached to an upper surface of the flat portion 3 of the blister sheet 2 in order to hermetically seal the plurality of drug pockets 6. A blister pack 1, which accommodates and seals the drugs in a state of separating the drugs in unit doses, includes the blister sheet 2 in which drugs are accommodated and the cover 7 attached to the blister sheet 2. The lower surface of the cover 7 that is attached to the upper surface of the flat portion 3 of the blister sheet 2 is an adhesive surface to which an adhesive is applied. A user may press and tear the cover 7 using his/her fingers or a tool to pull the drugs from the drug pockets 6 and take the same.

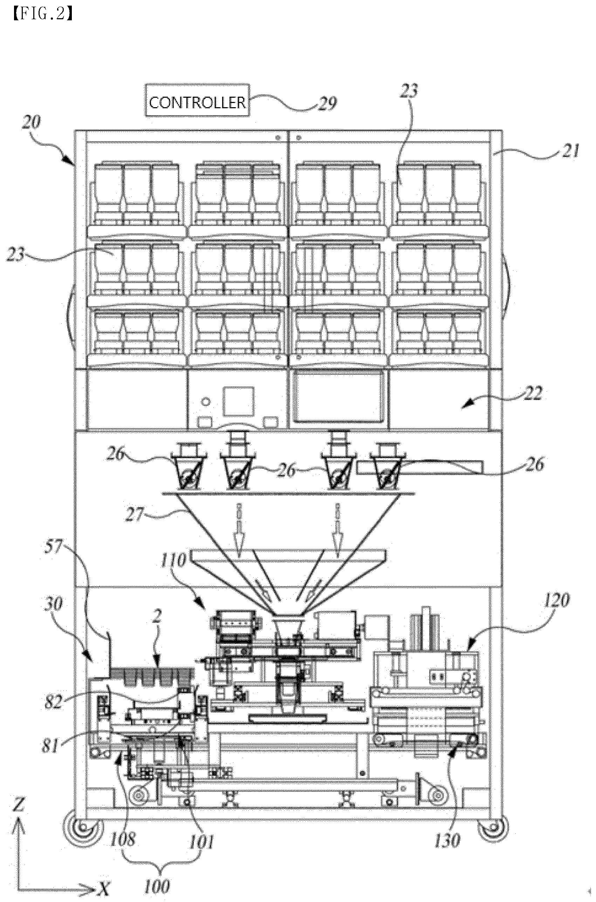

FIG. 2 is a front view of a blister packing apparatus for drugs according to an embodiment of the present invention. Referring to FIGs. 1 and 2 together, a blister packing apparatus 20 for drugs is an apparatus that automatically performs processes of dispensing drugs prepared in unit doses to the plurality of drug pockets 6 of the blister sheet 2 (refer to FIG. 1) and hermetically sealing the blister sheet 2 using the cover 7 to form the blister pack 1, and is mainly provided in large hospitals or pharmacies.

The blister packing apparatus 20 for drugs includes a cabinet-type housing 21, and includes a drug supply unit 22, a drug dispensing unit 110, a blister sheet supply unit 30 for a blister pack, a cover attaching unit 120, a blister sheet feeding unit 100, and a blister pack discharge conveyor 130, which are provided in the housing 21.

The drug supply unit 22 is located in an upper portion of the housing 21, and the drug dispensing unit 110, the blister sheet supply unit 30, the cover attaching unit 120 for a blister pack, the blister sheet feeding unit 100, and the blister pack discharge conveyor 130 are located below the drug supply unit 22 in the housing 21. In addition, the blister packing apparatus 20 for drugs further includes a controller 29 configured to control operation of the drug supply unit 22, the drug dispensing unit 110, the blister sheet supply unit 30, the cover attaching unit 120 for a blister pack, the blister sheet feeding unit 100, and the blister pack discharge conveyor 130.

The drug supply unit 22 includes a plurality of drug cassettes 23, in which different kinds of drugs are accommodated, and hoppers 26 and 27, which collect the drugs discharged from the drug cassettes 23 and guide the collected drugs to be sequentially discharged downward. In detail, specific drugs corresponding to a prescription input through a server or a user interface are discharged from the drug cassettes 23 storing the same, and fall down through a drug falling passage (not shown). The drugs are collected in a plurality of intermediate hoppers 26 disposed under the plurality of drug cassettes 23, fall down therefrom in an adjusted falling order, and sequentially fall down in unit doses through a final hopper 27 according to the prescription.

The drug dispensing unit 110 receives the drugs falling down from the final hopper 27 of the drug supply unit 22, inspects whether the received drugs are drugs prepared in a unit dose according to the prescription, and dispenses and drops the drugs of a unit dose to each of the plurality of drug pockets 6 of the blister sheet 2. The blister sheet supply unit 30 for a blister pack is disposed on the left side of the drug dispensing unit 110, and drops and supplies a blister sheet 2 having no drugs in the plurality of drug pockets 6 one by one. The cover attaching unit 120 is disposed on the right side of the drug dispensing unit 30, and attaches the cover 7 to the upper surface of the flat portion 3 of the blister sheet 2, with the plurality of drug pockets 6 filled with the drugs, to form the blister pack 1 having the plurality of closed drug pockets 6. However, unlike what is illustrated in FIG. 2, the blister sheet supply unit 30 for a blister pack may be disposed on the right side of the drug dispensing unit 110, and the cover attaching unit 120 may be disposed on the left side of the drug dispensing unit 110.

The blister sheet feeding unit 100 feeds the blister sheet 2 falling down from the blister sheet supply unit 30 to the drug dispensing unit 110, and feeds the blister sheet 2, with the plurality of drug pockets 6 filled with the drugs by the drug dispensing unit 110, from the drug dispensing unit 110 to the cover attaching unit 120.

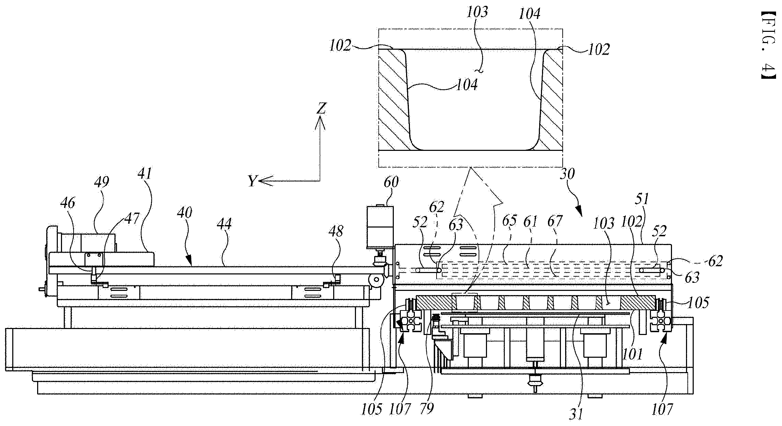

In detail, the blister sheet feeding unit 100 includes a blister sheet tray 101, a tray driver 108, and a pair of guide rails 107 (refer to FIG. 4). One blister sheet 2 is seated on the blister sheet tray 101. The tray driver 108 moves the blister sheet tray 101 between the blister sheet supply unit 30 for a blister pack, the drug dispensing unit 110, and the cover attaching unit 120. The pair of guide rails 107 extends in a direction parallel to an X-axis in order to guide movement of the blister sheet tray 101. Guide rollers 105 (refer to FIG. 4) are mounted on a front surface and a rear surface of the blister sheet tray 101. The guide rollers 105 are engaged with the guide rails 107 in order to guide movement of the blister sheet tray 101 in a direction parallel to the X-axis.

The blister sheet tray 101 includes a flat portion support surface 102 (refer to FIG. 4), which supports the flat portion 3 of the blister sheet 2, and a plurality of pocket-portion-corresponding cavities 103 (refer to FIG. 4), into which the plurality of pocket portions 5 of the blister sheet 2, which protrude downward, is fitted in one-to-one correspondence. Inner side surfaces 104 (refer to FIG. 4) of the pocket-portion-corresponding cavities 103 are formed to be tapered so that the pocket portions 5 protruding downward in a tapered manner are brought into surface contact therewith and supported thereby. Therefore, when the blister sheet tray 101 on which the blister sheet 2 is seated is moved at high speed, the blister sheet 2 is prevented from being separated from the blister sheet tray 101.

When the blister sheet 2 falling down from the blister sheet supply unit 30 for a blister pack is seated on the blister sheet tray 101 located below the blister sheet supply unit 30, the blister sheet tray 101 is moved to and stopped at a position below the drug dispensing unit 110. The drugs corresponding to the prescription fall down from the drug dispensing unit 110 at once, and are simultaneously received in the plurality of drug pockets 6.

When the blister sheet tray 101 on which the blister sheet 2, with the plurality of drug pockets 6 filled with the drugs, is seated is moved to and stopped at a position below the cover attaching unit 120, the cover 7 is attached to the upper surface of the flat portion 3 of the blister sheet 2 to completely form the blister pack 1. The blister pack 1 is lifted upward so as to be separated from the blister sheet tray 101, and the blister sheet tray 101 separated from the blister pack 1 is moved back to a position at which a new blister sheet 2 having no drugs in the plurality of drug pockets 6 falls down to be seated on the blister sheet tray 101, that is, a position below the blister sheet supply unit 30 for a blister pack. The blister pack discharge conveyor 130 discharges the blister pack 1 completely formed by attaching the cover 7 to the blister sheet 2 to a loading position outside the housing 21 of the blister packing apparatus 20 for drugs.

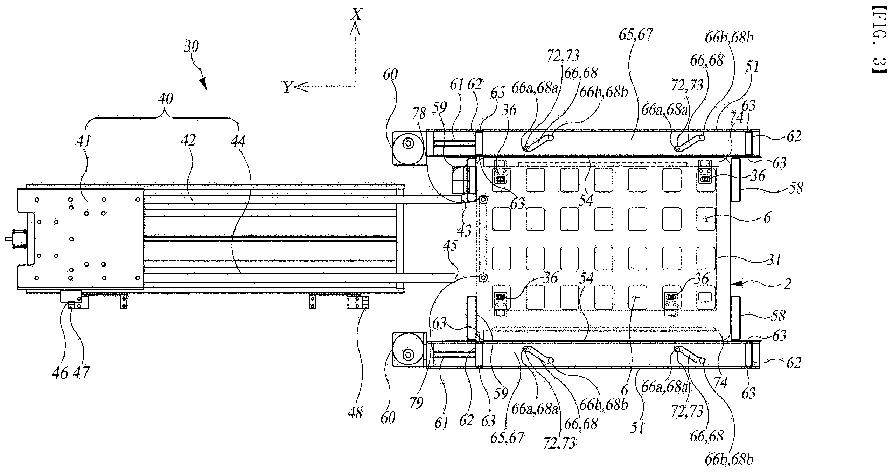

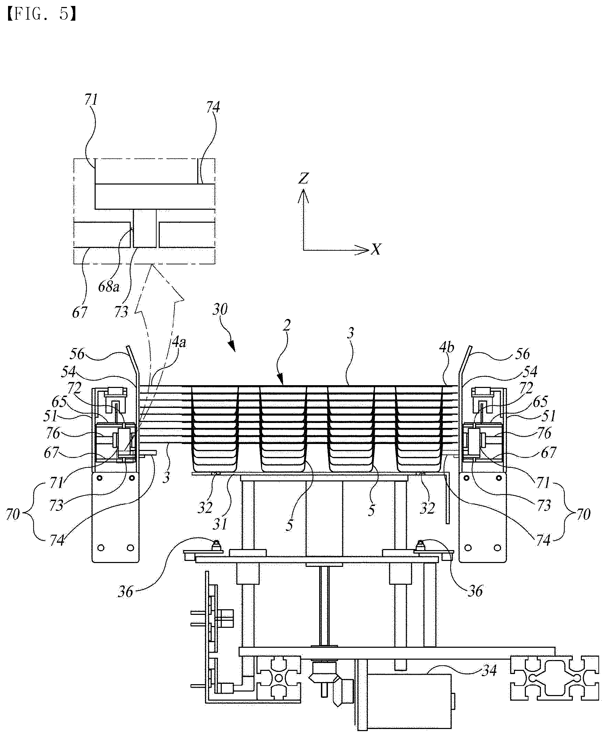

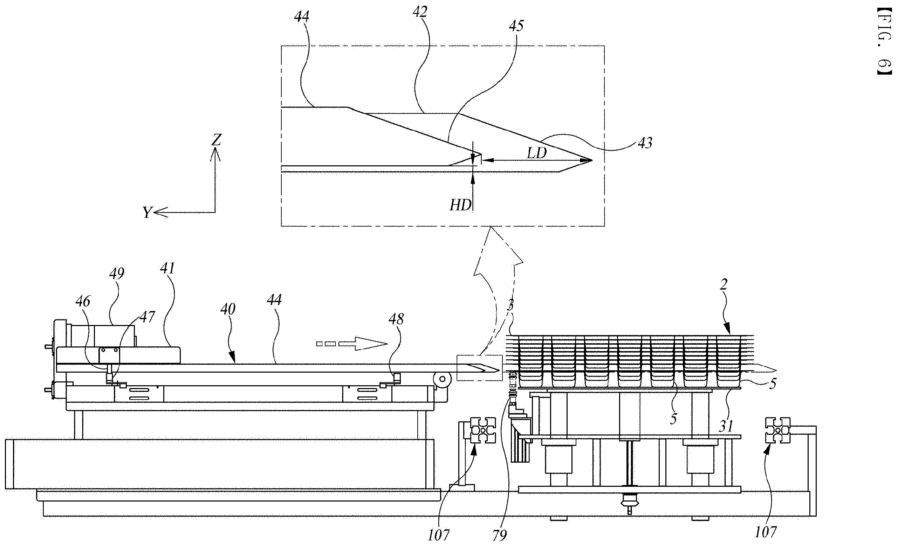

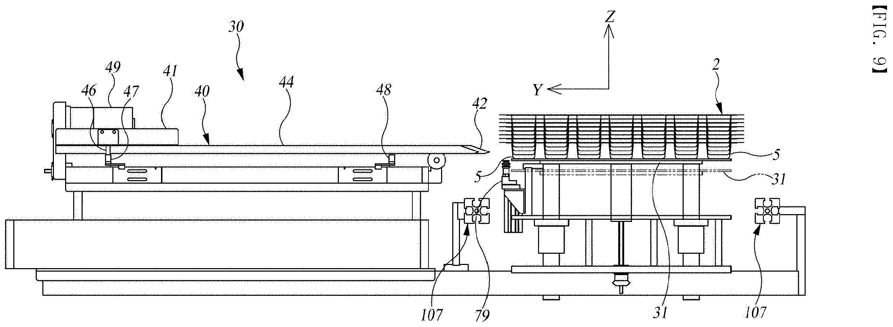

FIGs. 3 and 4 are a plan view and a left side view of the blister sheet supply unit provided in the blister packing apparatus for drugs shown in FIGs. 1 and 2. FIGs. 5 to 9 are views sequentially showing operation of the blister sheet supply unit provided in the blister packing apparatus for drugs shown in FIG. 2. FIGs. 5, 7, and 8 are front views, and FIGs. 6 and 9 are left side views. Referring to FIGs. 3 to 6 together, the blister sheet supply unit 30 for a blister pack drops and supplies a plurality of stacked blister sheets 2 one by one so that the supplied blister sheet 2 is supported on the blister sheet tray 101, and includes a lifting plate 31, a fork 40, a pair of stoppers 74, and a pair of suction holders 78 and 79.

The lifting plate 31 contacts and supports the lower surfaces of the plurality of pocket portions 5 of the lowermost blister sheet 2 disposed at the lowest position among the plurality of stacked blister sheets 2 to support the lowermost blister sheet 2. The lifting plate 31 is moved up and down by power of a lifting plate driving motor 34 to a support position, a preparation position slightly higher than the support position, and a bottom position lower than the support position.

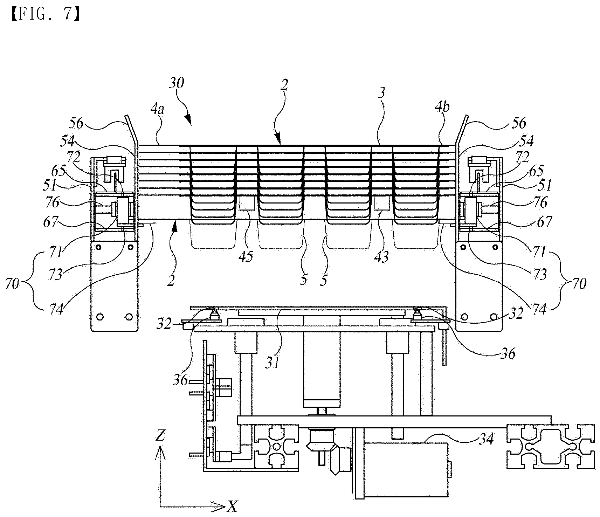

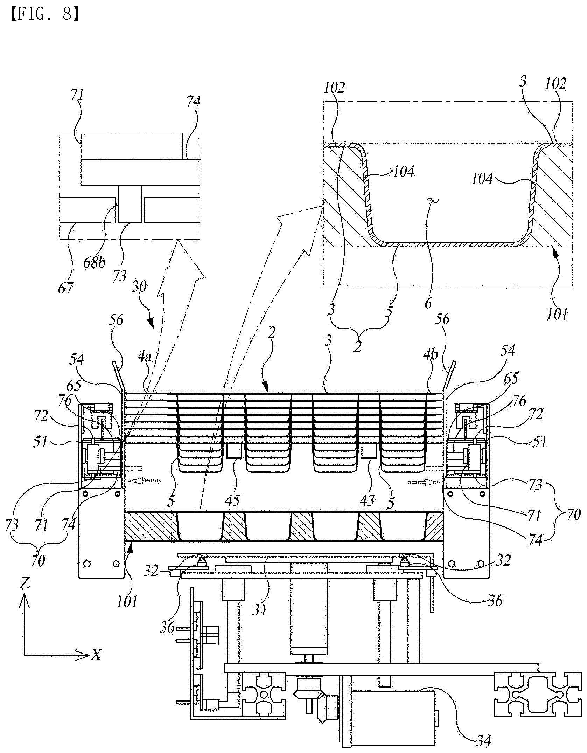

As shown in FIG. 5, the lifting plate 31 located at the support position supports the lowermost blister sheet 2. As shown by a solid line in FIG. 9, after the lowermost blister sheet 2 falls down, the lifting plate 31 located at the preparation position supports a new lowermost blister sheet 2 supported by the fork 40. The second lowermost blister sheet 2 among the plurality of stacked blister sheets 2 becomes the new lowermost blister sheet 2 after the lowermost blister sheet 2 shown in FIG. 7 falls down. As shown in FIG. 8, the lifting plate 31 located at the bottom position does not support the blister sheet 2, and is located at a lower position than the blister sheet tray 101 moving to a region below the plurality of stacked blister sheets 2.

Referring to FIGs. 3 and 8, when the lowermost blister sheet 2 among the plurality of stacked blister sheets 2 falls and is seated and supported on the blister sheet tray 101, the plurality of pocket portions 5 of the blister sheet 2 is fitted into the plurality of pocket-portion-corresponding cavities 103 (refer to FIG. 4) corresponding thereto, and the flat portion 3 of the blister sheet 2 is supported on the flat portion support surface 102. Accordingly, when the blister sheet tray 101 is moved at high speed in a direction parallel to the X-axis, the blister sheet 2 is prevented from being separated from the blister sheet tray 101.

The blister sheet supply unit 30 for a blister pack further includes a plurality of sheet loading detection sensors 36. During movement of the blister sheet tray 101, the plurality of sheet loading detection sensors 36 detects whether one blister sheet 2 is seated and supported on the blister sheet tray 101 so as not to be separated therefrom. In the illustrated embodiment, four sheet loading detection sensors 36 are provided. However, the number of sheet loading detection sensors may be greater or less than four. The four sheet loading detection sensors 36 are disposed under the lifting plate 31 located at the bottom position so as to overlap the lifting plate 31.

Each of the sheet loading detection sensors 36 is a photo sensor, which includes a light transmitting unit (not shown) and a light receiving unit (not shown). The light transmitting unit projects light upward to one of the plurality of pocket-portion-corresponding cavities 103. The light receiving unit detects light reflected when the pocket-portion-corresponding cavities 103 are blocked.

The lifting plate 31 is provided with four transparent windows 32 corresponding to the four sheet loading detection sensors 36. The light projected upward from the light transmitting unit of the respective sheet loading detection sensors 36 passes through the transparent windows of the lifting plate 31 and travels to the pocket-portion-corresponding cavities 103 in the blister sheet tray 101, and the light reflected by the blocked pocket-portion-corresponding cavities 103 passes through the transparent windows of the lifting plate 31 and travels to the sheet loading detection sensors 36. Each of the transparent windows 32 is aligned with a corresponding one of the sheet loading detection sensors 36 along a line parallel to a Z-axis. The transparent windows 32 may be open through-holes formed in the lifting plate 31, or may be open through-holes blocked by a transparent plate member such as glass.

With this configuration, the four sheet loading detection sensors 36 detect, in a non-contact manner, whether the four pocket-portion-corresponding cavities 103 aligned therewith are blocked by the pocket portions 5 of the blister sheet 2. Upon determining, based on detection signals from the sheet loading detection sensors 36, that the blister sheet 2 is not accurately seated and supported on the blister sheet tray 101, the controller 29 stops operation of the blister packing apparatus 20 for drugs including movement of the blister sheet tray 101.

Referring again to FIGs. 3 to 6, the fork 40 includes a pair of horizontal bars 42 and 44, a horizontal bar support block 41, and a fork driving motor 49. The pair of horizontal bars 42 and 44 extends parallel to a Y-axis and is spaced apart from each other. The horizontal bar support block 41 supports and fixes the pair of horizontal bars 42 and 44. The fork driving motor 49 provides power so that the horizontal bar support block 41 and the pair of horizontal bars 42 and 44 supported thereby move in a direction parallel to the Y-axis.

As shown in FIG. 3, when the fork 40 is located at a backward position, the pair of horizontal bars 42 and 44, that is, the first and second horizontal bars 42 and 44, are spaced apart from the plurality of stacked blister sheets 2 so as not to overlap the same.

In the state in which the lifting plate 31 is located at the support position and supports the lowermost blister sheet 2 among the plurality of stacked blister sheets 2, as shown by an alternate long and two short dashes line in FIG. 6, when the fork 40 moves to a forward position, the first and second horizontal bars 42 and 44 move simultaneously in a direction parallel to the negative (-) Y-axis direction across the plurality of stacked blister sheets 2 to support the second lowermost blister sheet 2 located directly on the lowermost blister sheet 2.

In detail, when the fork 40 is located at the backward position, the plurality of blister sheets 2 is stacked on the lifting plate 31 in such a manner that a plurality of drug pockets 6 of any one blister sheet 2 is fitted into a plurality of drug pockets 6 of another blister sheet 2 located directly thereunder. Therefore, the second lowermost blister sheet 2 is stacked on the lowermost blister sheet 2 such that the plurality of pocket portions 5 thereof is fitted into the plurality of drug pockets 6 of the lowermost blister sheet 2.

The vertical thickness of distal end portions 43 and 45 of the first and second horizontal bars 42 and 44 is greater than the vertical gap between the flat portion 3 of the lowermost blister sheet 2 and the flat portion 3 of the second lowermost blister sheet 2 stacked thereon. Therefore, when the fork 40 moves to the forward position in the state in which the lifting plate 31 is located at the support position, the first and second horizontal bars 42 and 44 increase the vertical gap between the flat portion 3 of the lowermost blister sheet 2 and the flat portion 3 of the second lowermost blister sheet 2, whereby the plurality of pocket portions 5 of the second lowermost blister sheet 2 is separated from the plurality of drug pockets 6 of the lowermost blister sheet 2 so as not to contact the same.

The first horizontal bar 42 and the second horizontal bar 44 have tapered wedge-shaped distal end portions 43 and 45. The wedge-shaped distal end portions 43 and 45 are tapered so as to reliably enter and increase the gap between the flat portion 3 of the second lowermost blister sheet 2 and the flat portion 3 of the lowermost blister sheet 2. When the fork 40 is located at the forward position, the first horizontal bar 42 supports the flat portion 3 between the pocket portions 5 in the first column and the pocket portions 5 in the second column that are relatively close to a right end portion 4b of the second lowermost blister sheet 2, and the second horizontal bar 44 supports the flat portion 3 between the pocket portions 5 in the third column and the pocket portions 5 in the fourth column that are relatively close to a left end portion 4a of the second lowermost blister sheet 2.

The blister sheet 2 is formed such that the left end portion 4a thereof, which is the flat portion 3 between the left edge thereof and the leftmost pocket portions 5, i.e. the pocket portions 5 in the fourth column, is wider than the right end portion 4b thereof, which is the flat portion 3 between the right edge thereof and the rightmost pocket portions 5, i.e. the pocket portions 5 in the first column. Accordingly, when the plurality of blister sheets 2 is stacked vertically one above another, the gap between the right end portions 4b of the lowermost blister sheet 2 and the second lowermost blister sheet 2 may be greater than the gap between the left end portions 4a thereof.

Among the pair of horizontal bars 42 and 44, the first horizontal bar 42 further protrudes toward the second lowermost blister sheet 2 than the second horizontal bar 44. In detail, a length difference LD between the distal end of the first horizontal bar 42 and the distal end of the second horizontal bar 44 in a direction parallel to the Y-axis may be 20 to 50 mm.

As described above, the vertical gap between the right end portions 4b of the lowermost and second lowermost blister sheets 2 may be greater than the vertical gap between the left end portions 4a thereof. In this case, when the fork 40 moves to the forward position, the distal end portion 43 of the first horizontal bar 42 first enters the gap between the flat portions 3 of the lowermost and second lowermost blister sheets 2 between the pocket portions 5 in the first column and the second column that are relatively close to the right end portions 4b, whereby the gap between the flat portions 3 of the lowermost and second lowermost blister sheets 2 increases due to the thickness of the distal end portion 43 of the first horizontal bar 42. Accordingly, the vertical gap between the flat portions 3 of the lowermost and second lowermost blister sheets 2 between the pocket portions 5 in the third column and the fourth column that are closer to the left end portions 4a than to the right end portions 4b also increases.

Therefore, the distal end portion 45 of the second horizontal bar 44 enters without an error the increased gap between the flat portions 3 of the lowermost and second lowermost blister sheets 2 between the pocket portions 4 in the third column and the fourth column. In this way, when the pair of horizontal bars 42 and 44 reaches the forward position, the second lowermost blister sheet 2 is reliably separated from the lowermost blister sheet 2. For the same reason that the distal end of the first horizontal bar 42 is designed to further protrude forward than the distal end of the second horizontal bar 44, the first horizontal bar 42 may be designed to be located at a slightly lower position than the second horizontal bar 44. When the first horizontal bar 42 is designed to be located at a lower position than the second horizontal bar 44, a vertical height difference HD between the first horizontal bar 42 and the second horizontal bar 44 may be greater than 0 and less than 2 mm.

The pair of suction holders 78 and 79 moves up and down along with the vertical movement of the lifting plate 31, and sucks and pulls down the flat portion 3 of the lowermost blister sheet 2 supported on the lifting plate 31 located at the support position. In detail, when the fork 40 starts to move from the backward position to the forward position, the first suction holder 78 sucks and pulls down a rear end portion of the flat portion 3 between the pocket portions 5 in the first column and the second column of the lowermost blister sheet 2, and the second suction holder 79 sucks and pulls down a rear end portion of the flat portion 3 between the pocket portions 5 in the third column and the fourth column of the lowermost blister sheet 2. Accordingly, when the distal end portions 43 and 45 of the first and second horizontal bars 42 and 44 enter the gap between the flat portions 3 of the lowermost blister sheet 2 and the second lowermost blister sheet 2, the vertical gap between the flat portions 3 of the lowermost blister sheet 2 and the second lowermost blister sheet 2 greatly increases.

In order to suck the rear end of the flat portion 3 of the lowermost blister sheet 2 with a stronger negative pressure, the first and second suction holders 78 and 79 move farther upward as shown by an alternate long and two short dashes line in FIG. 6, stop sucking after the distal end portions 43 and 45 of the first and second horizontal bars 42 and 44 enter the gap between the lowermost and second lowermost blister sheets 2, and then move down back to the original position thereof as shown by a solid line in FIG. 6.

The fork 40 further includes a backward position detection sensor 47 and a forward position detection sensor 48 for detection of the backward position and the forward position. The horizontal bar support block 41 is provided with a sensor dog 46 that is detected by the sensors 47 and 48. When the fork 40 moves backward from the forward position and thus the sensor dog 46 is detected by the backward position detection sensor 47, the controller 29 determines that the fork 40 has reached the backward position, and stops operation of the fork driving motor 49. Conversely, when the fork 40 moves forward from the backward position and thus the sensor dog 46 is detected by the forward position detection sensor 48, the controller 29 determines that the fork 40 has reached the forward position, and stops operation of the fork driving motor 49.

In the housing 21 of the blister packing apparatus 20 for drugs (refer to FIG. 2), the pair of guide rails 107 extends in a leftward-rightward direction, specifically a direction parallel to the X-axis, and the fork 40 is configured to move in a forward-backward direction, specifically a direction parallel to the Y-axis, which intersects the extension direction of the guide rails 107. Accordingly, the blister sheet supply unit 30 for a blister pack and the blister packing apparatus 20 for drugs may be easily designed to have a compact width in the leftward-rightward direction, and the blister packing apparatus 20 for drugs may be installed in a limited installation space.

The pair of stoppers 70 is disposed symmetrically in the leftward-rightward direction in order to block the left and right end portions 4a and 4b of the lowermost blister sheet 2 among the plurality of stacked blister sheets 2 when the lifting plate 31 is located at the bottom position, thereby preventing falling of the lowermost blister sheet 2. The pair of stoppers 70 is movable between a falling prevention position at which the stoppers 70 prevent falling of the lowermost blister sheet 2 as shown by a solid line in FIG. 7 and a falling allowance position at which the stoppers 70 do not block the left and right end portions 4a and 4b of the lowermost blister sheet 2 as shown by a solid line in FIG. 8 to allow falling of the lowermost blister sheet 2.

The blister sheet supply unit 30 for a blister pack further includes a pair of outer walls 51, a pair of inner walls 54, a pair of stopper driving motors 60, a pair of screws 61, a pair of upper guide plates 65, and a pair of lower guide plates 67, which are disposed symmetrically in the leftward-rightward direction. The pair of inner walls 54 is disposed so as to be spaced apart from each other by the width of the blister sheet 2 in the leftward-rightward direction, i.e. a direction parallel to the X-axis, and extends in a forward-backward longitudinal direction of the blister sheet 2, i.e. a direction parallel to the Y-axis. The pair of inner walls 54 is provided at upper end portions thereof with a pair of inclined stack guides 56 extending upward at an incline so that the left and right end portions 4a and 4b of the blister sheets 2 are not caught thereby.

As described above, the vertical gap between the right end portions 4b of the vertically stacked blister sheets 2 is greater than the vertical gap between the left end portions 4a thereof. Therefore, if the plurality of blister sheets 2 is stacked above the upper ends of the pair of inclined stack guides 56, the blister sheets 2 located in upper layers among the plurality of stacked blister sheets 2 may tilt to the left, resulting in collapse of the plurality of stacked blister sheets 2. A plurality of auxiliary stack guides 57 (refer to FIG. 2) is provided in order to prevent collapse of the stacked blister sheets. The plurality of auxiliary stack guides 57 is stacked on the left inclined stack guide 56 among the pair of inclined stack guides 56 in order to prevent the blister sheets 2 from tilting to the left. A pair of front end guides 58 and a pair of rear end guides 59 are fixed to the front end portion and the rear end portion of the pair of inner walls 54. The pair of front end guides 58 and the pair of rear end guides 59 define positions of the front end corners and the rear end corners of the blister sheets 2 that are stacked. The plurality of blister sheets 2 is stacked in a loading space defined by the pair of inner walls 54, the pair of front end guides 58, and the pair of rear end guides 59.

Each of the pair of stoppers 70 may be moved between the falling prevention position and the falling allowance position by power of a corresponding one of the stopper driving motors 60. Each of the pair of screws 61 extends parallel to the Y-axis between a corresponding one of the inner walls 54 and a corresponding one of the outer walls 51, and is rotated by power of a corresponding one of the stopper driving motors 60. Each of the pair of upper guide plates 65 is disposed above the screw 61 between a corresponding one of the inner walls 54 and a corresponding one of the outer walls 51, and extends, with a predetermined width, parallel to the Y-axis. Each of the pair of lower guide plates 67 is disposed below the screw 61 between a corresponding one of the inner walls 54 and a corresponding one of the outer walls 51, and extends, with a predetermined width, parallel to the Y-axis.

The front end and the rear end of the upper guide plate 65 and the lower guide plate 67 disposed vertically are fixedly coupled to upper ends and lower ends of a pair of connection members 62. The pair of connection members 62 has through-holes formed therein, through which the screw 61 passes. The screw 61 has a male thread pattern formed on the outer circumferential surface thereof, and the pair of connection members 62 has female thread patterns formed on the inner circumferential surfaces of the through-holes, with which the male thread pattern of the screw 61 meshes. Therefore, when the rotating shaft of the stopper driving motor 60 rotates, the upper guide plate 65 and the lower guide plate 67 move forward or backward simultaneously according to the rotating direction of the rotating shaft.

The inner wall 54 and the outer wall 51 may have connection member guide grooves 52 formed in the front end portions and the rear end portions thereof so as to extend parallel to the Y-axis. In this case, the pair of connection members 62, which are engaged with the screw 60, includes guide protrusions 63 protruding therefrom to the left and right so as to be fitted into the connection member guide grooves. Therefore, when the upper and lower guide plates 65 and 67 are moved in the forward-backward direction by power of the stopper driving motor 60, the upper and lower guide plates 65 and 67 may be moved in the forward-backward direction while being kept horizontal without tilting.

A stopper guide beam 76 is mounted between a corresponding one of the outer walls 51 and a corresponding one of the inner walls 54 so as to extend parallel to the X-axis and to be fixed at both ends thereof to the outer wall 51 and the inner wall 54. Each of the stoppers 70 includes a stopper block 71, an upper link protrusion 72, a lower link protrusion 73 slidably coupled to the stopper guide beam 76, and a stopper blade 74. The upper link protrusion72 protrudes upward from the upper end of the stopper block 71. The lower link protrusion 73 protrudes downward from the lower end of the stopper block 71. When the stoppers 70 are located at the falling preventing position, the stopper blades 74 pass through the inner walls 54 to protrude to regions below the left end portion 4a and the right end portion 4b of the lowermost blister sheet 2.

The stopper blade 74 extends in a direction parallel to the longitudinal direction of the blister sheet 2, i.e. a direction parallel to the Y-axis. The inner wall 54 has a blade protruding slot (not shown) formed therein so as to be open to allow the stopper blade 74 to protrude through the inner wall 54.

The upper guide plate 65 and the lower guide plate 67 have oblique grooves 66 and 68 formed therein so as to extend in the same oblique direction. The oblique grooves 66 and 68 extend obliquely so as to be gradually closer to the outer wall 51 than to the inner wall 54 from the rear to the front. The upper link protrusion 72 is fitted into the oblique groove 66 in the upper guide plate 65, and the lower link protrusion 74 is fitted into the oblique groove 68 in the lower guide plate 67. When the upper guide plate 65 and the lower guide plate 67 are moved parallel to the positive (+) Y-axis direction or parallel to the negative (-) Y-axis direction by power of the stopper driving motor 60, the upper and lower link protrusions 72 and 74 fitted into the oblique grooves 66 and 68 in the upper and lower guide plates 65 and 67 are pushed and pressed by inner surfaces defining the oblique grooves 66 and 68, whereby the stopper 70 is moved to the falling preventing position or the falling allowance position.

In detail, as shown in FIG. 5, when the upper guide plate 65 and the lower guide plate 67 move to a maximum extent in the negative (-) Y-axis direction, the upper link protrusion 72 and the lower link protrusion 74 are located at ends 66a and 68a of the oblique grooves 66 and 68, and the stopper 70 moves to the falling prevention position at which the stopper blade 74 thereof passes through the inner wall 54 and protrudes inward.

Conversely, as shown in FIG. 8, when the upper guide plate 65 and the lower guide plate 67 move to a maximum extent in the positive (+) Y-axis direction, the upper link protrusion 72 and the lower link protrusion 74 are located at the other ends 66b and 68b of the oblique grooves 66 and 68, and the stopper 70 moves to the falling allowance position at which the stopper blade 74 thereof moves backward so as not to pass through the inner wall 54.

Referring to FIG. 2, the blister sheet supply unit 30 for a blister pack may further include a sheet absence checking sensor 81 and a sheet replenishment warning sensor 82. The sheet absence checking sensor 81 detects whether the blister sheet 2 is supported on the lifting plate 31 located at the support position. The sheet replenishment warning sensor 82 detects whether the number of blister sheets 2 stacked on the sheet absence checking sensor 81 is less than a predetermined number. Each of the sheet absence checking sensor 81 and the sheet replenishment warning sensor 82 may be an optical sensor that detects presence or absence of the blister sheet 2 in a non-contact manner.

When the absence of the blister sheet 2 supported on the lifting plate 31 is detected by the sheet absence checking sensor 81, the controller 29 stops operation of the lifting plate 31, the fork 40, the pair of stoppers 70, and the pair of suction holders 78 and 79, and waits until the blister sheet 2 is stacked on the lifting plate 31. In detail, the controller stops not only operation of the blister sheet supply unit 30 for a blister pack, except for the sensors 81 and 82, but also operation of the drug supply unit 22, the drug dispensing unit 110, the cover attaching unit 120, the blister sheet feeding unit 100, and the blister pack discharge conveyor 130, and waits. Upon determining, using the sheet replenishment waring sensor 82, that the number of stacked blister sheets 2 is less than a predetermined proper number, the controller 29 does not stop operation of the blister sheet supply unit 30 for a blister pack, and notifies a worker of the necessity to replenish the blister sheet 2 through a visual or audible means.

Hereinafter, the operation and structure of the blister sheet supply unit for a blister pack will be described in more detail with sequential reference to FIGs. 5 to 9. Referring to FIGs. 3 and 5, when the fork 40 is located at the backward position, when the lifting plate 31 is located at the support position, and when the pair of stoppers 70 is located at the falling prevention position, the plurality of pocket portions 5 of the lowermost blister sheet 2 among the plurality of blister sheets 2 stacked between the pair of inner walls 54 is in contact with and supported on the lifting plate 31.

Referring to FIG. 6, the fork 40 moves from the backward position to the forward position. Accordingly, the second lowermost blister sheet 2 is supported by the first and second horizontal bars 42 and 44 of the fork 40. While the fork 40 is moving from the backward position to the forward position, as described above, the first and second suction holders 78 and 79 suck and pull the rear end portion of the flat portion 3 of the second lowermost blister sheet 2, and the first and second horizontal bars 42 and 44 increase the gap between the flat portions 3 of the lowermost blister sheet 2 and the second lowermost blister sheet 2 stacked thereon, thereby separating the lowermost blister sheet 2 from the second lowermost blister sheet 2 and blister sheets 2 stacked thereon.

Referring to FIG. 7, the lifting plate 31 moves down from the support position to the bottom position. Accordingly, the lowermost blister sheet 2 separated from the second lowermost blister sheet 2 falls down slightly due to gravity, but the left end portion 4a and the right end portion 4b of the lowermost blister sheet 2 are blocked by the stopper blades 74 of the pair of stoppers 70 located at the falling prevention position, and thus the lowermost blister sheet 2 does not fall down any more.

Referring to FIGs. 7 and 8, the blister sheet tray 101 on which no blister sheet 2 is seated or supported moves parallel to the negative (-) X-axis direction to a position above the lifting plate 31 located at the bottom position so as to overlap the lifting plate 31. In this case, the blister sheet tray 101 is aligned vertically with the lowermost blister sheet 2.

Subsequently, as shown by a solid line in FIG. 8, the pair of stoppers 70 moves to the falling allowance position. Then, the pair of stopper blades 74 is hidden between the inner walls 54 and the outer walls 51 so as not to protrude to a region between the pair of inner walls 54. Therefore, the stoppers 70 do not block the left end portion 4a and the right end portion 4b of the lowermost blister sheet 2 any more, and thus the lowermost blister sheet 2 falls down to be seated and supported on the blister sheet tray 101. Since the lowermost blister sheet 2 is separated and falls down from the stacked blister sheets 2, the second lowermost blister sheet 2 supported by the first and second horizontal bars 42 and 44 of the fork 40 becomes a new lowermost blister sheet.

Referring to FIGs. 8 and 9, the blister sheet tray 101 on which the blister sheet 2 is seated and supported moves parallel to the positive (+) X-axis direction to a position that does not overlap vertically the lifting plate 31. In detail, the blister sheet tray 101 moves to a region below the drug dispensing unit 110 (refer to FIG. 2). Subsequently, as shown by a solid line in FIG. 9, the lifting plate 31 moves up to the preparation position higher than the support position to support the new lowermost blister sheet 2. Subsequently, as shown by a solid line in FIG. 9, the fork 40 moves back to the backward position.

Thereafter, as shown by an alternate long and two short dashes line in FIG. 9, the lifting plate 31 moves down from the preparation position to the support position. Accordingly, all of the blister sheets 2 stacked between the pair of inner walls 54 move down slightly. Subsequently, as shown in FIG. 5, the pair of stoppers 70 moves from the falling allowance position to the falling prevention position. Subsequently, as shown by an alternate long and two short dashes line in FIG. 6, the fork 40 moves from the backward position to the forward position to support a new second lowermost blister sheet 2 disposed directly on the new lowermost blister sheet 2.

In the blister sheet supply unit 30 for a blister pack described above, the fork 40 is introduced between the lowermost blister sheet 2 and the second lowermost blister sheet 2 among the plurality of stacked blister sheets 2, thereby reliably separating the lowermost blister sheet 2 and the second lowermost blister sheet 2 from each other and supporting the second lowermost blister sheet 2 and the remaining blister sheets 2 stacked thereon so that the blister sheets 2 do not fall down. Accordingly, the reliability and speed of processes in which the blister sheets 2 are dropped one by one and one dropped blister sheet is seated and supported on the blister sheet tray 101 are improved. As a result, the operational efficiency and reliability of the blister packing apparatus 20 for drugs including the blister sheet supply unit 30 for a blister pack are improved.

Although the present invention has been described with reference to embodiments illustrated in the drawings, it is to be understood that the embodiments are merely exemplary and various modifications or equivalent embodiments thereof may be made from the detailed description of the present invention by those skilled in the art. Therefore, the true scope of protection of the present invention should be determined only by the appended claims.

### [Industrial Applicability]

The present invention may be used in the fields of separating and packaging prepared drugs, such as in pharmacies, hospitals, senior living communities, and drug packaging companies.

## Claims

1. A blister sheet supply unit for a blister pack configured to drop and supply a plurality of stacked blister sheets, each comprising a plurality of drug pockets formed to be open upward and spaced apart from each other, one by one so as to be supported on a blister sheet tray, the blister sheet supply unit comprising:
a lifting plate configured to support a lowermost blister sheet among the plurality of stacked blister sheets when located at a support position and to be separated from the lowermost blister sheet when moving down to a bottom position lower than the support position;
a fork configured to support a second lowermost blister sheet disposed directly on the lowermost blister sheet when moving from a backward position spaced apart from the plurality of stacked blister sheets to a forward position across the plurality of stacked blister sheets in a state in which the lifting plate is located at the support position; and
a stopper configured to be movable between a falling prevention position at which the stopper blocks left and right end portions of the lowermost blister sheet to prevent falling of the lowermost blister sheet and a falling allowance position at which the stopper does not block the left and right end portions of the lowermost blister sheet.

2. The blister sheet supply unit according to claim 1, wherein, in a state in which the lifting plate is located at the support position to support the lowermost blister sheet, in which the fork is located at the forward position to support the second lowermost blister sheet, and in which the stopper is located at the falling preventing position, when the lifting plate moves down to the bottom position, when the blister sheet tray moves to a position above the lifting plate so as to overlap the lifting plate, and when the stopper moves to the falling allowance position, the lowermost blister sheet falls down and is supported on the blister sheet tray, and the second lowermost blister sheet supported by the fork becomes a new lowermost blister sheet.

3. The blister sheet supply unit according to claim 2, wherein, after the blister sheet is supported on the blister sheet tray, the blister sheet tray having the blister sheet supported thereon moves to a position not overlapping the lifting plate, the lifting plate moves up to a preparation position higher than the support position to support the new lowermost blister sheet, the fork moves to the backward position, the lifting plate moves down to the support position, the stopper moves to the falling prevention position, and the fork moves to the forward position to support a new second lowermost blister sheet disposed directly on the new lowermost blister sheet.

4. The blister sheet supply unit according to claim 1, wherein the blister sheet comprises a plurality of pocket portions protruding downward to form the plurality of drug pockets and a flat portion supporting the plurality of pocket portions,
wherein the fork comprises a plurality of horizontal bars extending in a horizontal direction and spaced apart from each other in order to contact and support the flat portion of the blister sheet,
wherein, when the fork is located at the backward position, the second lowermost blister sheet is stacked on the lowermost blister sheet such that the plurality of pocket portions thereof is fitted into the plurality of drug pockets of the lowermost blister sheet, and
wherein, when the fork moves from the backward position to the forward position, the plurality of horizontal bars increases a gap between the flat portion of the lowermost blister sheet and the flat portion of the second lowermost blister sheet so that the plurality of pocket portions of the second lowermost blister sheet is separated from the plurality of drug pockets of the lowermost blister sheet.

5. The blister sheet supply unit according to claim 4, wherein the plurality of horizontal bars is provided in a pair,
wherein a gap between one end portion among the left and right end portions of the second lowermost blister sheet and an end portion of the lowermost blister sheet corresponding to the one end portion is greater than a gap between the other end portion of the second lowermost blister sheet and an end portion of the lowermost blister sheet corresponding to the other end portion, and
wherein, among the pair of horizontal bars, a distal end of a horizontal bar closer to end portions having the greater gap therebetween further protrudes toward the second lowermost blister sheet than a distal end of the other horizontal bar.

6. The blister sheet supply unit according to claim 4, further comprising a suction holder configured to suck and pull down the flat portion of the lowermost blister sheet so that a gap between the flat portion of the lowermost blister sheet and the flat portion of the second lowermost blister sheet increases when the fork moves from the backward position to the forward position and distal ends of the plurality of horizontal bars enter the gap between the flat portion of the lowermost blister sheet and the flat portion of the second lowermost blister sheet.

7. The blister sheet supply unit according to claim 1, further comprising:
a stopper driving motor configured to provide power to move the stopper between the falling prevention position and the falling allowance position; and
a guide plate disposed on an upper side or a lower side of the stopper and configured to be reciprocated in a direction intersecting a moving direction of the stopper by power of the stopper driving motor,
wherein the guide plate comprises an oblique groove formed therein so as to extend obliquely with respect to a moving direction of the guide plate,
wherein the stopper comprises a link protrusion fitted into the oblique groove, and
wherein, when the guide plate moves in one direction and an opposite direction, the link protrusion fitted into the oblique groove is pushed and pressed by an inner surface defining the oblique groove, whereby the stopper moves to the falling prevention position and the falling allowance position.

8. The blister sheet supply unit according to claim 1, further comprising a sheet loading detection sensor configured to detect whether one blister sheet is supported on the blister sheet tray.

9. The blister sheet supply unit according to claim 8, wherein the blister sheet comprises a plurality of pocket portions protruding downward to form the plurality of drug pockets and a flat portion supporting the plurality of pocket portions,
wherein the blister sheet tray comprises a flat portion support surface supporting the flat portion of the blister sheet and a plurality of pocket-portion-corresponding cavities formed therein to allow the plurality of pocket portions of the blister sheet to be fitted thereinto in one-to-one correspondence, and
wherein the sheet loading detection sensor is a photo sensor configured to detect, in a non-contact manner, whether at least one of the plurality of pocket-portion-corresponding cavities is blocked by a pocket portion corresponding thereto.

10. The blister sheet supply unit according to claim 9, wherein the sheet loading detection sensor is disposed below the lifting plate, and
wherein the lifting plate is provided with a transparent window to allow light projected upward from the sheet loading detection sensor to travel to the blister sheet tray through the lifting plate.

11. The blister sheet supply unit according to claim 1, further comprising a sheet absence checking sensor configured to detect whether the blister sheet is supported on the lifting plate located at the support position,
wherein, when absence of the blister sheet supported on the lifting plate is detected by the sheet absence checking sensor, operation of the lifting plate, the fork, and the stopper is stopped.

12. A blister packing apparatus for drugs, the blister packing apparatus comprising:
a drug dispensing unit configured to dispense and drop drugs prepared in a unit dose according to a prescription to each of a plurality of drug pockets formed in a blister sheet so as to be open upward and spaced apart from each other;
a drug supply unit disposed above the drug dispensing unit to drop drugs to the drug dispensing unit;
the blister sheet supply unit according to any one of claims 1 to 11, the blister sheet supply unit being configured to drop and supply a blister sheet having no drugs in the plurality of drug pockets one by one;
a cover attaching unit configured to attach a cover to the blister sheet, with the plurality of drug pockets filled with the drugs, to form a blister pack having the plurality of closed drug pockets; and
a blister sheet feeding unit configured to feed the blister sheet falling down from the blister sheet supply unit to the drug dispensing unit and to feed the blister sheet, with the plurality of drug pockets filled with the drugs, from the drug dispensing unit to the cover attaching unit,
wherein the blister sheet feeding unit comprises:
the blister sheet tray;
a tray driver configured to move the blister sheet tray between the blister sheet supply unit, the drug dispensing unit, and the cover attaching unit; and
a guide rail configured to guide movement of the blister sheet tray.

13. The blister packing apparatus according to claim 12, wherein the guide rail extends in a leftward-rightward direction, and
wherein the fork moves in a direction intersecting an extending direction of the guide rail.
